# EUROPÄISCHE PATENTANMELDUNG

(11) **EP 4 434 314 A1**
(43) Veröffentlichungstag der Anmeldung: **25.09.2024**
(21) Anmeldenummer: 24152153.3
(22) Anmeldetag: 16.01.2024
(51) Int. Cl.: A01B 69/00, G06F 21/62, G06V 10/44, G06V 10/82, G06V 20/56, A01B 79/00

(54) **LANDWIRTSCHAFTLICHE ARBEITSMASCHINE MIT EINEM ANONYMISIERUNGSMODUL**

(30) Priorität: 21.03.2023 DE 102023107047
(71) Anmelder: CLAAS E-Systems GmbH, 49201 Dissen (DE)
(72) Erfinder: SCHRÖDER, Axel, 33332 Gütersloh (DE); KORTHALS, Timo, 33818 Leopoldshöhe (DE); REDENIUS, Jannik, 32361 Pr. Oldendorf (DE); TÖNIGES, Torben, 33602 Bielefeld (DE); JÜRSCHIK, Peter, 33335 Gütersloh (DE); BONE, Sven, 49124 Georgsmarienhütte (DE); MONKENBUSCH, Robin, 33378 Rheda-Wiedenbrück (DE); KILDEBY, Allan, 3060 Espergærde (DK)
(74) Vertreter: CLAAS Gruppe

(57) **Zusammenfassung**

Die vorliegende Erfindung betrifft eine landwirtschaftliche Arbeitsmaschine (1) zum Einsatz auf einem landwirtschaftlichen Feld (2).

Die vorliegende Erfindung beruht auf dem allgemeinen Gedanken, dass die landwirtschaftliche Arbeitsmaschine (1) ein Anonymisierungsmodul (6) zur Anonymisierung von Nichtfeldbereichen (7) in sensorbasierten Umgebung-Abbildungen (4) der landwirtschaftlichen Arbeitsmaschine (1) einsetzt.

## Beschreibung

Die vorliegende Erfindung betrifft eine landwirtschaftliche Arbeitsmaschine, insbesondere eine autonome selbstfahrende landwirtschaftliche Arbeitsmaschine, zum Einsatz auf einem landwirtschaftlichen Feld.

Heutzutage ist die Erfassung kamerabasierter Bilder zwar technisch möglich, jedoch aufgrund des rechtlichen Datenschutzes sehr problematisch, wenn in diesem kamerabasierten Bild ein Bereich erfasst wird, der richtigerweise aufgrund des Datenschutzes nicht ohne Zustimmung aufgenommen und gespeichert werden darf.

Um in einer solchen Situation die Aufnahme und Speicherung kamerabasierte Bilder technisch als auch rechtlich sicherzustellen, offenbart die EP 3 857 436 A1 eine selektive Erzeugung eines maskierten Bildes mittels einer stationären bzw. nicht beweglichen Kameravorrichtung, wobei ein neuronaler Faltungsnetzwerkdetektor zur Erkennung eines ersten Merkmals, welches angezeigt werden darf, und eines zweiten Merkmals, welches nicht angezeigt werden darf, verwendet wird. Anschließend wird das erste und zweite Merkmal des Bildes mit gespeicherten Referenzmerkmalen verglichen und dann ein Unschärfegenerator zur Erzeugung des maskierten Bildes eingesetzt, um das anzeigbare Merkmal anzuzeigen und das nicht anzeigbare Merkmal zu maskieren.

Zwar wird in der EP 3 857 436 A1 erwähnt, dass mit der stationären Kameravorrichtung beispielsweise ein speziell etikettierten Traktor erfasst und der diesen Traktor umgebende Bereich dann maskiert werden kann, jedoch hat dies während des Feldeinsatzes des Traktors insbesondere den regelungstechnischen Nachteil, dass die Blickrichtung der stationären Kameravorrichtung nicht der Blickrichtung und nicht dem Blickbereich entspricht, den ein Landwirt in diesem Traktor hat, und außerdem ist es kostentechnisch stark nachteilig, da heutzutage die landwirtschaftlichen Felder, die mit so einem Traktor befahren werden, sehr groß sind und daher eine Vielzahl an stationären Kameravorrichtung aufweisen müssten, um eine ausreichende Generierung zuverlässiger kamerabasierter Bilder zu ermöglichen.

Der vorliegenden Erfindung liegt die Aufgabe zugrunde, eine verbesserte landwirtschaftliche Arbeitsmaschine anzugeben, die während des Einsatzes auf einem landwirtschaftlichen Feld die Aufnahme und Speicherung kamerabasierte Bilder technisch als auch rechtlich ermöglicht.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass die landwirtschaftliche Arbeitsmaschine ein Anonymisierungsmodul zur Anonymisierung von Nichtfeldbereichen in sensorbasierten Umgebung-Abbildungen der landwirtschaftlichen Arbeitsmaschine einsetzt, insbesondere aufweist.

Die erfindungsgemäße landwirtschaftliche Arbeitsmaschine kann als selbstfahrende landwirtschaftliche Arbeitsmaschine, insbesondere als selbstfahrender Feldhäcksler oder als selbstfahrender Mähdrescher, oder als Traktor, insbesondere als Traktor mit einem Anbaugerät, für den landwirtschaftlichen Einsatz auf einem landwirtschaftlichen Feld ausgebildet sein. Dieses landwirtschaftliche Feld kann ein landwirtschaftlich genutzter Erdboden sein, der regelmäßig bearbeitet und mit einer Feldfrucht bestellt wird.

Die landwirtschaftliche Arbeitsmaschine weist wenigstens eine Sensorvorrichtung zu Erzeugung einer Abbildung, insbesondere einer digitalen Abbildung, des Umgebungsbereiches der landwirtschaftlichen Arbeitsmaschine auf. Diese Abbildung kann eine zweidimensionale und/oder eine dreidimensionale Abbildung sein. Diese Sensorvorrichtung kann als optisch-elektronische Einrichtung zur Videoüberwachung und/oder Videoaufzeichnung ausgebildet sein. Eine Videoüberwachung und/oder Videoaufzeichnung kann eine Sequenz von optisch-elektronisch aufgenommen Abbildungen des Umgebungsbereiches der landwirtschaftlichen Arbeitsmaschine umfassen.

Die landwirtschaftliche Arbeitsmaschine weist, insbesondere innerhalb der landwirtschaftlichen Arbeitsmaschine und/oder außerhalb der landwirtschaftliche Arbeitsmaschine, ein Anonymisierungsmodul auf, welches dazu vorgesehen und eingerichtet, insbesondere ausgebildet und/oder programmiert, ist, zu ermitteln, ob in der mittels der Sensorvorrichtung erzeugten Abbildung ein Nichtfeldbereich, der sich nicht auf das landwirtschaftliche Feld bezieht, vorhanden ist. Dieser Nichtfeldbereich kann unter Umständen personenbezogene Daten oder öffentliche sowie private Grundstücke von Dritten aufweisen.

Das Anonymisierungsmodul ist dazu vorgesehen und eingerichtet, insbesondere ausgebildet und/oder programmiert, diesen ermittelten Nichtfeldbereich in der mittels der Sensorvorrichtung erzeugten Abbildung, insbesondere vor einer Speicherung der Abbildung, zu anonymisieren. Dies hat insbesondere den Vorteil, dass eine Speicherung von personenbezogene Daten verhindert wird, und daher eine Aufnahme und/oder Speicherung der erzeugten Abbildung technisch als auch rechtlich ermöglicht wird.

Das Anonymisierungsmodul kann dazu vorgesehen und eingerichtet, insbesondere ausgebildet und/oder programmiert, sein, den ermittelten Nichtfeldbereich mittels einer Maskierung, insbesondere mittels einer einfarbigen Maskierung, in der mittels der Sensorvorrichtung erzeugten Abbildung zu anonymisieren. Alternativ oder zusätzlich kann das Anonymisierungsmodul dazu vorgesehen und eingerichtet, insbesondere ausgebildet und/oder programmiert, sein, den ermittelten Nichtfeldbereich in der mittels der Sensorvorrichtung erzeugten Abbildung mittels einem Unschärfegenerator zu maskieren.

Das Anonymisierungsmodul kann innerhalb oder außerhalb der landwirtschaftlichen Arbeitsmaschine ausgebildet und/oder positioniert sein. Falls das Anonymisierungsmodul außerhalb der landwirtschaftlichen Arbeitsmaschine ausgebildet und/oder positioniert ist, kann es vorgesehen sein, dass die landwirtschaftliche Arbeitsmaschine dazu vorgesehen und eingerichtet ist, die Abbildung des Umgebungsbereiches vor einer Übertragung an das Anonymisierungsmodul zu verschlüsseln. Ferner kann es vorgesehen sein, dass Anonymisierungsmodul außerhalb der landwirtschaftlichen Arbeitsmaschine dazu vorgesehen und eingerichtet ist, nach einer Entschlüsselung der empfangenen Abbildung des Umgebungsbereiches, insbesondere unmittelbar und/oder ohne Speicherung, zu ermitteln, ob in der mittels der Sensorvorrichtung erzeugten Abbildung ein Nichtfeldbereich, der sich nicht auf das landwirtschaftliche Feld bezieht, vorhanden ist, und einen ermittelten Nichtfeldbereich in der mittels der Sensorvorrichtung erzeugten Abbildung zu anonymisieren.

Bei einer vorteilhaften Weiterbildung der erfindungsgemäßen Lösung ist vorgesehen, dass das Anonymisierungsmodul dazu vorgesehen und eingerichtet ist, den Nichtfeldbereich aus Felddaten, insbesondere aus von einem Farmmanagement-System erhaltenen Felddaten, zu ermitteln. Es kann vorgesehen sein, dass der Nicht-Feldbereich aus den Felddaten abgeleitet wird und/oder ein Geo-Fence-Datensatz erst von den Felddaten abgeleitet werden.

Bei einer vorteilhaften Weiterbildung der erfindungsgemäßen Lösung ist vorgesehen, dass das Anonymisierungsmodul dazu vorgesehen und eingerichtet, insbesondere ausgebildet und/oder programmiert, ist, den Nichtfeldbereich in Abhängigkeit eines Geo-Fence-Datensatzes bezüglich des landwirtschaftlichen Feldes und in Abhängigkeit von Positionsdaten der landwirtschaftlichen Arbeitsmaschine bezüglich des landwirtschaftlichen Feldes zu ermitteln. Basierend auf dem Geo-Fence-Datensatz und den Positionsdaten kann durch das Anonymisierungsmodul ermittelt werden, ob sich die landwirtschaftliche Arbeitsmaschine auf dem landwirtschaftlichen Feld befindet oder nicht. Falls die landwirtschaftliche Arbeitsmaschine sich nicht auf dem landwirtschaftlichen Feld befindet, kann das Anonymisierungsmodul dazu vorgesehen und eingerichtet sein, die Abbildung vollständig zu anonymisieren.

Bei einer vorteilhaften Weiterbildung der erfindungsgemäßen Lösung ist vorgesehen, dass der Geo-Fence-Datensatz virtuelle Feldgrenzen bezüglich des landwirtschaftlichen Feldes aufweist, wobei das Anonymisierungsmodul dazu vorgesehen und eingerichtet, insbesondere ausgebildet und/oder programmiert, ist, wenigstens einen vorhandenen Nichtfeldbereich in der mittels der Sensorvorrichtung erzeugten Abbildung in Abhängigkeit der virtuellen Feldgrenzen und den Positionsdaten zu ermitteln. Der Geo-Fence-Datensatz und/oder die Felddaten, insbesondere Feldgrenzdaten, können von einem, insbesondere externen, Farmmanagement-System stammen.

Der Geo-Fence-Datensatz kann eingemessene und/oder vermessene und/oder zertifizierte Geo-Fence-Daten umfassen. Der Geo-Fence-Datensatz kann alternativ oder zusätzlich Feldgrenz-Daten bezüglich der virtuellen Feldgrenzen des landwirtschaftlichen Feldes, auf dem die landwirtschaftliche Arbeitsmaschine eingesetzt wird oder werden soll, aufweisen. Die Feldgrenz-Daten können virtuelle Feldgrenzen definieren, die wenigstens abschnittsweise geradlinig und/oder wenigstens abschnittsweise gebogen ausgebildet sind. Die Feldgrenz-Daten können abgeschlossene virtuelle Feldgrenzen aufweisen, die eine Fläche des landwirtschaftlichen Feldes vollständig begrenzen.

Die Positionsdaten können von einer Positionsbestimmungseinrichtung, insbesondere einer Positionsbestimmungseinrichtung der landwirtschaftlichen Arbeitsmaschine, die zur Positionsbestimmung mittels Satellitennavigationssignalen ausgebildet und/oder programmiert ist, bereitgestellt werden. Hierbei kann wenigstens eine Satellitenvorrichtung zur Positionsbestimmung der landwirtschaftlichen Arbeitsmaschinen bezüglich der virtuellen Feldgrenzen eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der landwirtschaftlichen Arbeitsmaschine innerhalb der virtuellen Feldgrenzen zu ermitteln. Hierbei kann die stationäre Bodenstation außerhalb des durch die virtuellen Feldgrenzen begrenzten landwirtschaftlichen Feldes angeordnet sein.

Bei einer vorteilhaften Weiterbildung der erfindungsgemäßen Lösung ist vorgesehen, dass das Anonymisierungsmodul dazu vorgesehen und eingerichtet, insbesondere ausgebildet und/oder programmiert, ist, bei der Ermittlung des Nichtfeldbereiches zusätzlich ein zweidimensionales Modell des landwirtschaftlichen Feldes und/oder ein dreidimensionales Modell des landwirtschaftlichen Feldes einzubeziehen Das, insbesondere zweidimensionale und/oder dreidimensionale, Modell kann als Shape, als digitales Geländemodell, als binäre Maske, als Taskdatendatei, als GeoTIFF und/oder als ein anderer Informationsbehälter für georeferenzierte Daten ausgebildet sein.

Bei einer vorteilhaften Weiterbildung der erfindungsgemäßen Lösung ist vorgesehen, dass das Anonymisierungsmodul dazu vorgesehen und eingerichtet, insbesondere ausgebildet und/oder programmiert, ist, bei der Ermittlung des Nichtfeldbereiches zusätzlich Betriebsparameter der landwirtschaftlichen Arbeitsmaschine von einer Einstellvorrichtung der landwirtschaftlichen Arbeitsmaschine einzubeziehen.

Bei einer vorteilhaften Weiterbildung der erfindungsgemäßen Lösung ist vorgesehen, dass das Anonymisierungsmodul dazu vorgesehen und eingerichtet ist, bei der Ermittlung des Nichtfeldbereiches zusätzlich Bewegungsinformationen der landwirtschaftlichen Arbeitsmaschine von Bewegungssensoren der landwirtschaftlichen Arbeitsmaschine einzubeziehen. Das Anonymisierungsmodul kann dazu vorgesehen und eingerichtet, insbesondere ausgebildet und/oder programmiert, sein, eine Orientierung, insbesondere mittels einem Fahrrichtungsvektor, der landwirtschaftlichen Arbeitsmaschine zu ermitteln. Die Bewegungssensoren können beispielweise eine IMU (Inertial Measurement Unit) und/oder einen Kompass zur Erzeugung digitaler Kompassdaten ausbilden.

Bei einer vorteilhaften Weiterbildung der erfindungsgemäßen Lösung ist vorgesehen, dass das Anonymisierungsmodul dazu vorgesehen und eingerichtet ist, die Qualität des Geo-Fence-Datensatzes, insbesondere der virtuellen Feldgrenzen, bezüglich des landwirtschaftlichen Feldes und/oder die Qualität der Positionsdaten der landwirtschaftlichen Arbeitsmaschine bezüglich des landwirtschaftlichen Feldes einzubeziehen, und dass das Anonymisierungsmodul dazu vorgesehen und eingerichtet ist, die Anonymisierung der Abbildung mittels einer Größenanpassung des ermittelten Nichtfeldbereiches in Abhängigkeit der Qualität des Geo-Fence-Datensatzes und/oder in Abhängigkeit der Qualität der Positionsdaten einzustellen. Falls die Qualität des Geo-Fence-Datensatzes und/oder die Qualität der Positionsdaten sinkt und/oder ungenau ist, kann das Anonymisierungsmodul dazu vorgesehen und eingerichtet sein, die den Bereich in der Abbildung, der anonymisiert werden soll, zu vergrößern. Bei dieser Größenanpassung des ermittelten Nichtfeldbereiches kann es sein, dass ein Teil des landwirtschaftlichen Feldes, der an dem Nichtfeldbereich angrenzt, aufgrund der Vergrößerung des digitalen Nichtfeldbereiches auch als Nichtfeldbereich bezüglich der Anonymisierung eingestuft wird. Falls die Qualität des Geo-Fence-Datensatzes und/oder die Qualität der Positionsdaten optimal ist, kann das Anonymisierungsmodul dazu vorgesehen und eingerichtet sein, den Bereich in der Abbildung, der anonymisiert werden soll, zu minimieren, sodass der ermittelte Nichtfeldbereiches im Wesentlichen den realen Nichtfeldbereich betrifft. Hierdurch wird eine perfekte Anonymisierung und gleichzeigt eine maximale Abbildung des landwirtschaftlichen Feldes im Umgebungsbereich der landwirtschaftlichen Arbeitsmaschine ermöglicht. Der Übergang zwischen Vergrö-ßerung und Minimierung des digitalen Nichtfeldbereiches kann mehrere Zwischenstufen aufweisen. Eine Größenanpassung kann als Anpassung einer zweidimensionalen Fläche angesehen werden.

Bei einer vorteilhaften Weiterbildung der erfindungsgemäßen Lösung ist vorgesehen, dass das Anonymisierungsmodul dazu vorgesehen und eingerichtet ist, eine vollständige Anonymisierung der gesamten Abbildung zu bewirken, falls die Qualität des Geo-Fence-Datensatzes eine vordefinierte Geo-Fence-Qualität nicht aufweist und/oder falls die Qualität der Positionsdaten eine vordefinierte Positionsdaten-Qualität nicht aufweist. Dies hat den Vorteil, dass wenn beispielweise aufgrund einer sehr ungünstigen Wettersituation die Qualität der Positionsdaten so stark reduziert wird, dass nicht mehr ermittelt werden kann, ob die landwirtschaftliche Arbeitsmaschine sich auf dem landwirtschaftlichen Feld befindet oder nicht, die Wahrung des rechtlichen Datenschutzes mittels der Anonymisierung der gesamten Abbildung ermöglicht wird. Alternativ oder zusätzlich kann vorgesehen sein, dass die Aufnahme von Abbildungen gestoppt und/oder unterbunden wird falls die Qualität des Geo-Fence-Datensatzes eine vordefinierte Geo-Fence-Qualität nicht aufweist und/oder falls die Qualität der Positionsdaten eine vordefinierte Positionsdaten-Qualität nicht aufweist. Die Geo-Fence-Qualität und/oder die Positionsdaten-Qualität können wenigstens einen Qualitätswert umfassen.

Bei einer vorteilhaften Weiterbildung der erfindungsgemäßen Lösung ist vorgesehen, dass das Anonymisierungsmodul dazu vorgesehen und eingerichtet ist, einen ermittelten Nichtfeldbereich in der mittels der Sensorvorrichtung erzeugten Abbildung zeitlich vor einer Speicherung der Abbildung und/oder zeitlich vor einer Übertragung der Abbildung an ein Empfängersystem außerhalb landwirtschaftliche Arbeitsmaschine zu anonymisieren, und/oder dass das Anonymisierungsmodul dazu vorgesehen und eingerichtet ist, einem Fahrer in einer Kabine der landwirtschaftlichen Arbeitsmaschine die Abbildung eines Umgebungsbereiches der landwirtschaftlichen Arbeitsmaschine nicht anonymisiert darzustellen, jedoch vor einer Speicherung den ermittelten Nichtfeldbereich zu anonymisieren. Dies hat den Vorteil, dass eine unzulässige Übertragung unterbunden wird und gleichzeitig ein Fahrer in der Kabine der landwirtschaftlichen Arbeitsmaschine trotzdem stets vollständig den Umgebungsbereich der landwirtschaftlichen Arbeitsmaschine erfassen kann. Hierbei kann es vorgesehen sein, dass falls eine vollständige Anonymisierung der gesamten Abbildung zu bewirkt werden muss, falls die Qualität des Geo-Fence-Datensatzes eine vordefinierte Geo-Fence-Qualität nicht aufweist und/oder falls die Qualität der Positionsdaten eine vordefinierte Positionsdaten-Qualität nicht aufweist, dem Fahrer in der Kabine der landwirtschaftlichen Arbeitsmaschine trotzdem die Abbildung eines Umgebungsbereiches der landwirtschaftlichen Arbeitsmaschine ohne eine Speicherung vor Anonymisierung anzeigt wird.

Bei einer vorteilhaften Weiterbildung der erfindungsgemäßen Lösung ist vorgesehen, dass die Sensorvorrichtung eine Kameravorrichtung, insbesondere eine Monokameravorrichtung, zur Erzeugung eines zweidimensionalen Bildes bezüglich des Umgebungsbereiches ausbildet, und/oder dass die Sensorvorrichtung ein Messsystem zur Richtungs- und Abstandsmessung, insbesondere ein LIDAR-System und/oder eine Stereo-Kamera-System und/oder eine RADAR-System, zur Erzeugung eines dreidimensionalen Bildes bezüglich des Umgebungsbereiches ausbildet.

Ausgehend von dem zweidimensionalen Bild, welches von der Kameravorrichtung, insbesondere der Monokameravorrichtung, erzeugt wurde, kann das Anonymisierungsmodul dazu vorgesehen und eingerichtet sein, eine Projektion des zweidimensionalen Bildes, insbesondere mittels Inverse-Perspective-Mapping (IPM), vorzunehmen. Diese Projektion kann von Einstellungsparameter der Sensorvorrichtung und/oder von dem Geo-Fence-Datensatz, insbesondere den virtuellen Feldgrenzen, bezüglich des landwirtschaftlichen Feldes und/oder von den Positionsdaten der landwirtschaftlichen Arbeitsmaschine bezüglich des landwirtschaftlichen Feldes erfolgen. Das Anonymisierungsmodul kann dazu vorgesehen und eingerichtet sein, das zweidimensionale Bild mit dem zweidimensionalen Modell des landwirtschaftlichen Feldes und/oder dem dreidimensionalen Modell des landwirtschaftlichen Feldes zu kombinieren, um die Beabstandung und/oder Distanz und/oder Position von den mittels der Sensorvorrichtung erfassten Bereiche zu ermitteln. Alternativ oder zusätzlich kann das Anonymisierungsmodul kann dazu vorgesehen und eingerichtet sein, das zweidimensionale Bild auf ein zweidimensionales Modell des landwirtschaftlichen Feldes und/oder ein dreidimensionales Modell des landwirtschaftlichen Feldes zu projizieren, um die Beabstandung und/oder Distanz und/oder Position von den mittels der Sensorvorrichtung erfassten Bereiche zu ermitteln. Hierdurch wird der Einsatz einer kostengünstigen Monokameravorrichtung ermöglicht.

Das Messsystem zur Richtungs- und Abstandsmessung, insbesondere das LIDAR-System und/oder die Stereo-Kamera-System und/oder das RADAR-System, kann Objekte als auch die Tiefe und/oder Entfernung zu diesen Objekten ermitteln. Ausgehend von diesen Tiefen und/oder Entfernungen in Verbindung mit dem Geo-Fence-Datensatz, insbesondere der virtuellen Feldgrenzen, bezüglich des landwirtschaftlichen Feldes und den Positionsdaten der landwirtschaftlichen Arbeitsmaschine bezüglich des landwirtschaftlichen Feldes, insbesondere bezüglich der virtuellen Feldgrenzen, kann das Anonymisierungsmodul dazu vorgesehen und eingerichtet sein, einen Datenpunkt, insbesondere einen Messpunkt und/oder Pixel, und/oder mehrere Datenpunkte, insbesondere mehrere Messpunkte und/oder Pixel, des dreidimensionalen Bildes bezüglich des Umgebungsbereiches anonymisieren.

Bei einer vorteilhaften Weiterbildung der erfindungsgemäßen Lösung ist vorgesehen, dass das Anonymisierungsmodul zur Ermittlung des Nichtfeldbereiches dazu vorgesehen und eingerichtet ist, wenigstens einen Teilbereich des zweidimensionalen Bildes der Kameravorrichtung mit dem zweidimensionalen Modell und/oder dem dreidimensionalen Modell, insbesondere mittels einer Inverse-Perspective-Mapping-Methode, zu verknüpfen.

Bei einer vorteilhaften Weiterbildung der erfindungsgemäßen Lösung ist vorgesehen, dass das Anonymisierungsmodul dazu vorgesehen und eingerichtet ist, bereits anonymisierte Abbildungsbereiche aufgrund einer ausreichenden Beabstandung bezüglich der Sensorvorrichtung zu ignorieren. Beispielweise sind Abbildungsbereiche oberhalb des Horizontes und/oder des landwirtschaftlichen Feldes unter Umständen derart weit von der Sensorvorrichtung entfernt, dass diese Abbildungsbereiche derart ungenau, insbesondere verpixelt, sind, dass schon eine ausreichende Anonymisierung vorliegt. Das Ignorieren dieser Bereiche hat insbesondere den Vorteil, dass die für die Anonymisierung erforderliche Rechenkapazität erheblich reduziert und/oder zusätzlich die Anonymisierung beschleunigt wird.

Bei einer vorteilhaften Weiterbildung der erfindungsgemäßen Lösung ist vorgesehen, dass die landwirtschaftliche Arbeitsmaschine als autonome selbstfahrende landwirtschaftliche Arbeitsmaschine ausgebildet ist. In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome selbstfahrende landwirtschaftliche Arbeitsmaschinen zum Einsatz, die sich dadurch auszeichnen, dass kein Bediener in einer Kabine zur Steuerung derselben vorhanden ist bzw. sein muss. Demnach steht bei autonomen selbstfahrenden landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf dem landwirtschaftlichen Feld ausführen bzw. beauftragen kann. Derartige autonome landwirtschaftliche Arbeitsmaschinen werden daher auch als unbemannte selbstfahrende landwirtschaftliche Arbeitsmaschinen bezeichnet. Die autonome selbstfahrende landwirtschaftliche Arbeitsmaschine kann als autonom selbstfahrender Feldhäcksler oder als autonom selbstfahrender Mähdrescher, oder als autonomer Traktor, insbesondere als autonomer Traktor mit einem Anbaugerät, für den landwirtschaftlichen Einsatz auf einem landwirtschaftlichen Feld ausgebildet sein.

Ferner betrifft die Erfindung ein Anonymisierungsmodul zur Ermittlung und Anonymisierung eines Nichtfeldbereiches in einer Abbildung eines Umgebungsbereiches einer erfindungsgemäßen landwirtschaftlichen Arbeitsmaschine. Dieses Anonymisierungsmodul kann ein und/oder mehrere zuvor als auch nachfolgende beschrieben Details aufweisen. Das Anonymisierungsmodul kann innerhalb oder außerhalb der landwirtschaftlichen Arbeitsmaschine ausgebildet und/oder positioniert sein. Falls das Anonymisierungsmodul außerhalb der landwirtschaftlichen Arbeitsmaschine ausgebildet und/oder positioniert ist, kann es vorgesehen sein, dass die landwirtschaftliche Arbeitsmaschine dazu vorgesehen und eingerichtet ist, die Abbildung des Umgebungsbereiches vor einer Übertragung an das Anonymisierungsmodul zu verschlüsseln. Ferner kann es vorgesehen sein, dass Anonymisierungsmodul außerhalb der landwirtschaftlichen Arbeitsmaschine dazu vorgesehen und eingerichtet ist, nach einer Entschlüsselung der empfangenen Abbildung des Umgebungsbereiches, insbesondere unmittelbar und/oder ohne Speicherung, zu ermitteln, ob in der mittels der Sensorvorrichtung erzeugten Abbildung ein Nichtfeldbereich, der sich nicht auf das landwirtschaftliche Feld bezieht, vorhanden ist, und einen ermittelten Nichtfeldbereich in der mittels der Sensorvorrichtung erzeugten Abbildung zu anonymisieren.

Ferner betrifft die Erfindung die Verwendung des erfindungsgemäßen Anonymisierungsmoduls in der erfindungsgemäßen landwirtschaftlichen Arbeitsmaschine während eines Einsatzes dieser landwirtschaftlichen Arbeitsmaschine auf dem landwirtschaftlichen Feld, insbesondere zur Erzeugung von anonymisierten Daten, insbesondere anonymisierten Trainingsdaten und/oder anonymisierten Testdaten und/oder anonymisierten Validierungsdaten, für eine Einstellvorrichtung der landwirtschaftlichen Arbeitsmaschine und/oder zum Trainieren eines neuronalen Netzwerks, welches in dieser landwirtschaftlichen Arbeitsmaschine steuerungstechnisch eingesetzt wird. Die Einstellvorrichtung der landwirtschaftlichen Arbeitsmaschine kann dazu ausgebildet und/oder programmiert sein, die landwirtschaftliche Arbeitsmaschine und/oder Komponenten der landwirtschaftlichen Arbeitsmaschine in Abhängigkeit der anonymisierten Daten zu steuern und/oder zu regeln.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine beim Einsatz auf einem landwirtschaftlichen Feld, und
- Fig. 2: eine datentechnische Übersicht bezüglich des erfindungsgemäßen Anonymisierungsmoduls, und
- Fig. 3: einen beispielhaften Sichtbereich einer in Fahrtrichtung ausgerichteten Kamera einer erfindungsgemäßen landwirtschaftlichen Arbeitsmaschine, und
- Fig. 4: die landwirtschaftliche Arbeitsmaschine der Fig. 1 zu einem späteren Zeitpunkt während des Einsatzes auf dem landwirtschaftlichen Feld.

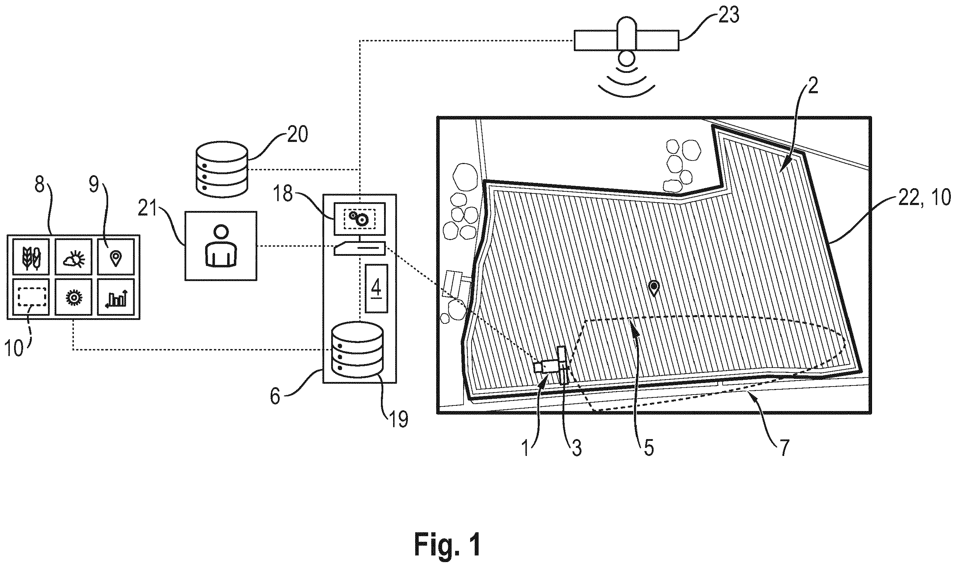

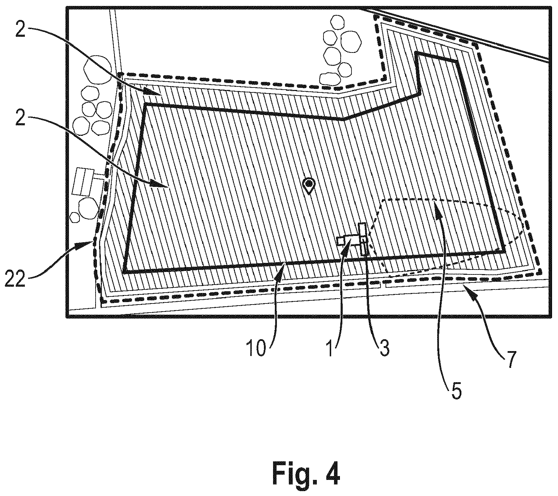

Fig. 1 zeigt eine landwirtschaftliche Arbeitsmaschine 1, die beispielweise als selbstfahrender Mähdrescher angedeutet ist, während eines landwirtschaftlichen Einsatzes auf einem landwirtschaftlichen Feld 2. Die landwirtschaftliche Arbeitsmaschine 1 weist wenigstens eine Sensorvorrichtung 3 zu Erzeugung einer digitalen Abbildung 4 des Umgebungsbereiches 5 der landwirtschaftlichen Arbeitsmaschine 1 auf.

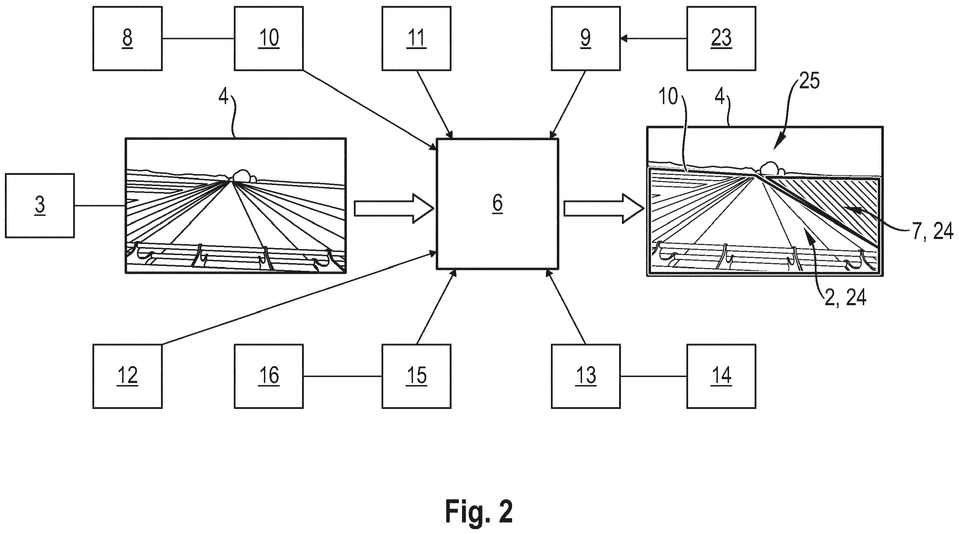

Diese Abbildung 4 kann eine zweidimensionale Abbildung, wie in der Fig. 2 angedeutet, und/oder eine dreidimensionale Abbildung des Umgebungsbereiches 5 der landwirtschaftlichen Arbeitsmaschine 1 sein. Die Sensorvorrichtung 3 kann beispielsweise als optisch-elektronische Einrichtung zur Videoüberwachung und/oder Videoaufzeichnung ausgebildet sein. Eine Videoüberwachung und/oder Videoaufzeichnung kann eine Sequenz von optisch-elektronisch aufgenommen Abbildungen 4, insbesondere zweidimensionale Abbildungen und/oder dreidimensionale Abbildungen, des Umgebungsbereiches 5 der landwirtschaftlichen Arbeitsmaschine 1 umfassen.

Wie in der Fig. 1 angedeutet, bezieht sich der Umgebungsbereiche 5 der landwirtschaftlichen Arbeitsmaschine 1 teilweise auf das landwirtschaftlichen Feld 2 innerhalb von Feldgrenzen 22 und teilweise auf einen Nichtfeldbereich 7, der sich nicht auf das landwirtschaftliche Feld 2, sondern auf den Bereich außerhalb des landwirtschaftlichen Feldes 2 und außerhalb der Feldgrenzen 22 bezieht.

Da die Erfassung dieses Umgebungsbereiches 5 zwar technisch möglich ist, jedoch aufgrund des rechtlichen Datenschutzes sehr problematisch sein kann, falls in diesem Bereich etwas erfasst wird, das aufgrund des Datenschutzes nicht ohne Zustimmung aufgenommen und datentechnisch gespeichert werden darf, ist erfindungsgemäß vorgesehen, dass die landwirtschaftliche Arbeitsmaschine 1 ein Anonymisierungsmodul 6 aufweist. Im Gegensatz zu der abstrakten Darstellung der Figuren, ist das Anonymisierungsmodul 6 in der landwirtschaftlichen Arbeitsmaschine 1 und/oder innerhalb der landwirtschaftlichen Arbeitsmaschine 1 ausgebildet.

Dieses Anonymisierungsmodul 6 kann eine Recheneinheit 18 und eine Datenbank 19 und/oder einen Datenspeicher 19 aufweisen, wobei das Anonymisierungsmodul 6 dazu vorgesehen und eingerichtet ist, zu ermitteln, ob in der mittels der Sensorvorrichtung 3 erzeugten Abbildung 4 ein Nichtfeldbereich 7, der sich nicht auf das landwirtschaftliche Feld 2 bezieht, vorhanden ist. Das Anonymisierungsmodul 6 ist zusätzlich dazu vorgesehen und eingerichtet, einen ermittelten Nichtfeldbereich 7 in der mittels der Sensorvorrichtung 3 erzeugten Abbildung 4 zu anonymisieren, insbesondere bevor diese Abbildung 4 in der Datenbank 19 und/oder dem Datenspeicher 19 hinterlegt wird.

Das Anonymisierungsmodul 6 kann dazu vorgesehen und eingerichtet sein, einen ermittelten Nichtfeldbereich 7 in der mittels der Sensorvorrichtung 3 erzeugten Abbildung 4 zeitlich vor einer Speicherung der Abbildung 4 und zeitlich vor einer Übertragung der Abbildung 4 an ein Empfängersystem, insbesondere an eine externe Datenbank 20, außerhalb landwirtschaftliche Arbeitsmaschine 1 zu anonymisieren. Gleichzeitig kann das Anonymisierungsmodul 6 jedoch dazu vorgesehen und eingerichtet sein, einem Fahrer 21 in einer Kabine der landwirtschaftlichen Arbeitsmaschine 1 die Abbildung 4 eines Umgebungsbereiches 5 der landwirtschaftlichen Arbeitsmaschine 1 zwar nicht anonymisiert darzustellen, jedoch trotzdem vor einer Speicherung und/oder externen Übertragung der Abbildung 4 den ermittelten Nichtfeldbereich 7 zu anonymisieren.

Die Positionsdaten 9 können von einer Positionsbestimmungseinrichtung 23, die zur Positionsbestimmung mittels Satellitennavigationssignalen ausgebildet und/oder programmiert ist, bereitgestellt werden. Hierbei kann wenigstens eine Satellitenvorrichtung zur Positionsbestimmung der landwirtschaftlichen Arbeitsmaschinen 1 bezüglich der virtuellen Feldgrenzen 10 eingesetzt werden.

Die Fig. 2 zeigt eine datentechnische Übersicht bezüglich des erfindungsgemäßen Anonymisierungsmoduls 6. Die Sensorvorrichtung 3 erzeugt die Abbildung 4 des Umgebungsbereiches 5 der landwirtschaftlichen Arbeitsmaschine 1 und übermittelt diese Abbildung 4 an das Anonymisierungsmodul 6. Hierbei ist die Abbildung 4 ein zweidimensionales Bild des Umgebungsbereiches 5, welches mit der Sensorvorrichtung 3 in Form einer Kameravorrichtung, insbesondere einer Monokameravorrichtung, erzeugt wurde. Alternativ oder zusätzlich kann die Sensorvorrichtung 3 ein Messsystem zur Richtungs- und Abstandsmessung, insbesondere ein LIDAR-System und/oder eine Stereo-Kamera-System und/oder eine RADAR-System, zur Erzeugung des dreidimensionalen Bildes bezüglich des Umgebungsbereiches 5 ausbilden.

Das Anonymisierungsmodul 6 ist dazu vorgesehen und eingerichtet, den Nichtfeldbereich 7 in der Abbildung 4 in Abhängigkeit der virtuellen Feldgrenzen 10 des Geo-Fence-Datensatzes 8, in Abhängigkeit der mittels der Positionsbestimmungseinrichtung 23 erfassten Positionsdaten 9, in Abhängigkeit von Betriebsparameters 13 der landwirtschaftlichen Arbeitsmaschine 1 von einer Einstellvorrichtung 14 der landwirtschaftlichen Arbeitsmaschine 1 und/oder in Abhängigkeit von Bewegungsinformationen 15 der landwirtschaftlichen Arbeitsmaschine 1 von Bewegungssensoren 16 der landwirtschaftlichen Arbeitsmaschine 1 zu ermitteln.

Zusätzlich kann das Anonymisierungsmodul 6 dazu vorgesehen und eingerichtet sein, ein zweidimensionales Modell 11 des landwirtschaftlichen Feldes 2 und/oder ein dreidimensionales Modell 12 des landwirtschaftlichen Feldes 2 zur Ermittlung des Nichtfeldbereiches 7 in der Abbildung 4 einzusetzen.

Das Anonymisierungsmodul 6 kann zur Ermittlung des Nichtfeldbereiches 7 dazu vorgesehen und eingerichtet sein, wenigstens einen Teilbereich des zweidimensionalen Bildes der Kameravorrichtung mit dem zweidimensionalen Modell 11 und/oder mit dem dreidimensionalen Modell 12, insbesondere mittels einer Inverse-Perspective-Mapping-Methode, zu verknüpfen.

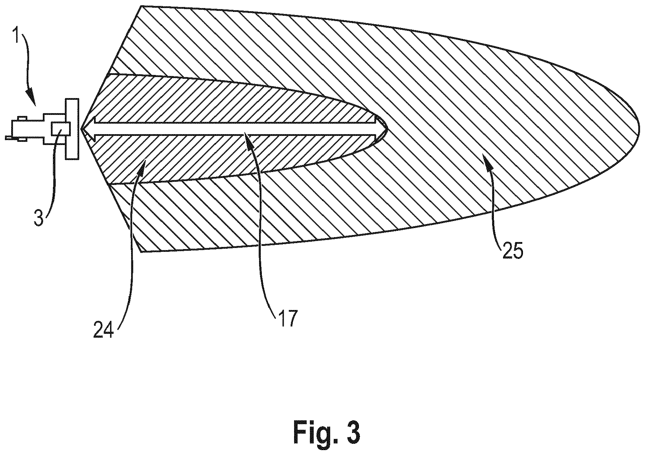

Die in der Fig. 2 mittels dem Anonymisierungsmodul 6 bearbeitete Abbildung 4 umfasst eine Projektion der virtuellen Feldgrenze 10 in diese Abbildung 4 und hierdurch eine Ermittlung des Nichtfeldbereiches 7, der anonymisiert wurde. Während das Feld 2 und der Nichtfeldbereich 7 erkennbar in der ursprünglichen Abbildung 4 sind, weist die ursprüngliche Abbildung 4 einen erkennbaren Bereich 24 und zusätzlich einen bereits anonymisierten Abbildungsbereich bzw. einen nichterkennbaren Bereich 25 aufgrund einer ausreichend großen Beabstandung 17 bezüglich der Sensorvorrichtung 3 auf, wie es in der Fig. 3 angedeutet ist. Das Anonymisierungsmodul 6 ist dazu vorgesehen und eingerichtet, solche aufgrund einer ausreichenden Beabstandung 17 bereits anonymisierte Abbildungsbereiche 25 zu ignorieren. Beispielweise sind Abbildungsbereiche 25 oberhalb des landwirtschaftlichen Feldes 2 so weit von der Sensorvorrichtung 3 entfernt, dass diese Abbildungsbereiche 25 derart ungenau, insbesondere verpixelt, sind, dass schon eine ausreichende Anonymisierung vorliegt. Das Ignorieren dieser nichterkennbaren Bereiche 25 hat insbesondere den Vorteil, dass die für die Anonymisierung erforderliche Rechenkapazität erheblich reduziert und zusätzlich die Anonymisierung beschleunigt wird.

Die Fig. 4 zeigt, dass das Anonymisierungsmodul 6 dazu vorgesehen und eingerichtet ist, die Qualität des Geo-Fence-Datensatzes 8, insbesondere der virtuellen Feldgrenzen 10, bezüglich des landwirtschaftlichen Feldes 2 und/oder die Qualität der Positionsdaten 9 der landwirtschaftlichen Arbeitsmaschine 1 bezüglich des landwirtschaftlichen Feldes 2 einzubeziehen, und dass das Anonymisierungsmodul 6 dazu vorgesehen und eingerichtet ist, die Anonymisierung der Abbildung 4 mittels einer Größenanpassung des ermittelten Nichtfeldbereiches 7 in Abhängigkeit der Qualität des Geo-Fence-Datensatzes 8 und/oder in Abhängigkeit der Qualität der Positionsdaten 9 einzustellen. Da beispielweise die Qualität des Geo-Fence-Datensatzes 8 und/oder der Qualität der Positionsdaten 9 in der Fig. 4 im Vergleich zur Fig. 1 schlechter ist, wird die virtuelle Feldgrenze 10 derart angepasst, dass der Bereich, der anonymisiert wird, neben dem Nichtfeldbereich 7 auch teilweise den Feldbereich 2 umfasst.

Falls die Qualität des Geo-Fence-Datensatzes 8 und/oder die Qualität der Positionsdaten 9 ausgehend von der Fig. 4 sich verbessern sollte, kann das Anonymisierungsmodul 6 dazu vorgesehen und eingerichtet sein, den Bereich in der Abbildung 4, der anonymisiert werden soll, zu minimieren, sodass der ermittelte Nichtfeldbereich im Wesentlichen den realen Nichtfeldbereich 7 betrifft.

Falls die Qualität des Geo-Fence-Datensatzes 8 und/oder die Qualität der Positionsdaten 9 ausgehend von der Fig. 4 schlechter werden sollten, kann das Anonymisierungsmodul 6 dazu vorgesehen und eingerichtet sein, eine vollständige Anonymisierung der gesamten Abbildung 4 zu bewirken. Ferner kann das Anonymisierungsmodul 6 dazu vorgesehen und eingerichtet sein, eine vollständige Anonymisierung der gesamten Abbildung 4 zu bewirken, wenn sich die landwirtschaftlichen Arbeitsmaschine 1 außerhalb des landwirtschaftlichen Feldes 2, also nicht innerhalb der realen Feldgrenzen 22 und/oder virtuellen Feldgrenzen 10 befindet.

### Bezugszeichenliste

- 1: Landwirtschaftliche Arbeitsmaschine
- 2: Landwirtschaftliches Feld
- 3: Sensorvorrichtung
- 4: Abbildung
- 5: Umgebungsbereich
- 6: Anonymisierungsmodul
- 7: Nichtfeldbereich
- 8: Geo-Fence-Datensatz
- 9: Positionsdaten
- 10: virtuelle Feldgrenzen
- 11: zweidimensionales Modell
- 12: dreidimensionales Modell
- 13: Betriebsparameter
- 14: Einstellvorrichtung
- 15: Bewegungsinformationen
- 16: Bewegungssensor
- 17: Beabstandung
- 18: Recheneinheit
- 19: Datenbank
- 20: Externe Datenbank
- 21: Fahrer
- 22: Feldgrenze
- 23: Positionsbestimmungseinrichtung
- 24: Erkennbarer Bereich
- 25: Nichterkennbarer Bereich

## Patentansprüche

1. Landwirtschaftliche Arbeitsmaschine (1) zum Einsatz auf einem landwirtschaftlichen Feld (2),
- mit einer Sensorvorrichtung (3) zur Erzeugung einer Abbildung (4) eines Umgebungsbereiches (5) der landwirtschaftlichen Arbeitsmaschine (1),
**dadurch gekennzeichnet,**
- **dass** ein Anonymisierungsmodul (6) dazu vorgesehen und eingerichtet ist, zu ermitteln, ob in der mittels der Sensorvorrichtung (3) erzeugten Abbildung (4) ein Nichtfeldbereich (7), der sich nicht auf das landwirtschaftliche Feld (2) bezieht, vorhanden ist, und
- **dass** das Anonymisierungsmodul (6) dazu vorgesehen und eingerichtet ist, einen ermittelten Nichtfeldbereich (7) in der mittels der Sensorvorrichtung (3) erzeugten Abbildung (4) zu anonymisieren.

2. Landwirtschaftliche Arbeitsmaschine (1) nach Anspruch 1,
**dadurch gekennzeichnet,**
- **dass** das Anonymisierungsmodul (6) dazu vorgesehen und eingerichtet ist, den Nichtfeldbereich (7) in Abhängigkeit von Felddaten, insbesondere aus von einem Farmmanagement-System erhaltenen Felddaten, zu ermitteln, und/oder
- **dass** das Anonymisierungsmodul (6) dazu vorgesehen und eingerichtet ist, den Nichtfeldbereich (7) in Abhängigkeit eines Geo-Fence-Datensatzes (8) bezüglich des landwirtschaftlichen Feldes (2) und in Abhängigkeit von Positionsdaten (9) der landwirtschaftlichen Arbeitsmaschine (1) bezüglich des landwirtschaftlichen Feldes (2) zu ermitteln.

3. Landwirtschaftliche Arbeitsmaschine (1) nach Anspruch 2,
**dadurch gekennzeichnet,**
- **dass** der Geo-Fence-Datensatz (8) virtuelle Feldgrenzen (10) bezüglich des landwirtschaftlichen Feldes (2) aufweist,
- wobei das Anonymisierungsmodul (6) dazu vorgesehen und eingerichtet ist, wenigstens einen vorhandenen Nichtfeldbereich (7) in der mittels der Sensorvorrichtung (3) erzeugten Abbildung (4) in Abhängigkeit der virtuellen Feldgrenzen (10) und den Positionsdaten (9) zu ermitteln.

4. Landwirtschaftliche Arbeitsmaschine (1) nach Anspruch 2 oder 3,
**dadurch gekennzeichnet,**
**dass** das Anonymisierungsmodul (6) dazu vorgesehen und eingerichtet ist, bei der Ermittlung des Nichtfeldbereiches (7) zusätzlich ein zweidimensionales Modell (11) des landwirtschaftlichen Feldes (2) und/oder ein dreidimensionales Modell (12) des landwirtschaftlichen Feldes (2) einzubeziehen.

5. Landwirtschaftliche Arbeitsmaschine (1) nach einem der Ansprüche 2 bis 4,
**dadurch gekennzeichnet,**
**dass** das Anonymisierungsmodul (6) dazu vorgesehen und eingerichtet ist, bei der Ermittlung des Nichtfeldbereiches (7) zusätzlich Betriebsparameter (13) der landwirtschaftlichen Arbeitsmaschine (1) von einer Einstellvorrichtung (14) der landwirtschaftlichen Arbeitsmaschine (1) einzubeziehen.

6. Landwirtschaftliche Arbeitsmaschine (1) nach einem der Ansprüche 2 bis 5,
**dadurch gekennzeichnet,**
**dass** das Anonymisierungsmodul (6) dazu vorgesehen und eingerichtet ist, bei der Ermittlung des Nichtfeldbereiches (7) zusätzlich Bewegungsinformationen (15) der landwirtschaftlichen Arbeitsmaschine (1) von Bewegungssensoren (16) der landwirtschaftlichen Arbeitsmaschine (1) einzubeziehen.

7. Landwirtschaftliche Arbeitsmaschine (1) nach einem der Ansprüche 2 bis 6,
**dadurch gekennzeichnet,**
- **dass** das Anonymisierungsmodul (6) dazu vorgesehen und eingerichtet ist, die Qualität des Geo-Fence-Datensatzes (8), insbesondere der virtuellen Feldgrenzen (10), bezüglich des landwirtschaftlichen Feldes (2) und/oder die Qualität der Positionsdaten (9) der landwirtschaftlichen Arbeitsmaschine (1) bezüglich des landwirtschaftlichen Feldes (2) einzubeziehen, und
- **dass** das Anonymisierungsmodul (6) dazu vorgesehen und eingerichtet ist, die Anonymisierung der Abbildung (4) mittels einer Größenanpassung des ermittelten Nichtfeldbereiches (7) in Abhängigkeit der Qualität des Geo-Fence-Datensatzes (8) und/oder in Abhängigkeit der Qualität der Positionsdaten (9) einzustellen.

8. Landwirtschaftliche Arbeitsmaschine (1) nach Anspruch 7,
**dadurch gekennzeichnet,**
**dass** das Anonymisierungsmodul (6) dazu vorgesehen und eingerichtet ist, eine vollständige Anonymisierung der gesamten Abbildung (4) zu bewirken, falls die Qualität des Geo-Fence-Datensatzes (8) eine vordefinierte Geo-Fence-Qualität nicht aufweist und/oder falls die Qualität der Positionsdaten (9) eine vordefinierte Positionsdaten-Qualität nicht aufweist.

9. Landwirtschaftliche Arbeitsmaschine (1) nach einem der Ansprüche 2 bis 8,
**dadurch gekennzeichnet,**
- **dass** das Anonymisierungsmodul (6) dazu vorgesehen und eingerichtet ist, einen ermittelten Nichtfeldbereich (7) in der mittels der Sensorvorrichtung (3) erzeugten Abbildung (4) zeitlich vor einer Speicherung der Abbildung (4) und/oder zeitlich vor einer Übertragung der Abbildung (4) an ein Empfängersystem außerhalb landwirtschaftliche Arbeitsmaschine (1) zu anonymisieren, und/oder
- **dass** das Anonymisierungsmodul (6) dazu vorgesehen und eingerichtet ist, einem Fahrer (21) in einer Kabine der landwirtschaftlichen Arbeitsmaschine (1) die Abbildung (4) eines Umgebungsbereiches (5) der landwirtschaftlichen Arbeitsmaschine (1) nicht anonymisiert darzustellen, jedoch vor einer Speicherung den ermittelten Nichtfeldbereich (7) zu anonymisieren.

10. Landwirtschaftliche Arbeitsmaschine (1) nach einem der Ansprüche 1 bis 9,
**dadurch gekennzeichnet,**
- **dass** die Sensorvorrichtung (3) eine Kameravorrichtung, insbesondere eine Monokameravorrichtung, zur Erzeugung eines zweidimensionalen Bildes bezüglich des Umgebungsbereiches (5) ausbildet, und/oder
- **dass** die Sensorvorrichtung (3) ein Messsystem zur Richtungs- und Abstandsmessung, insbesondere ein LIDAR-System und/oder eine Stereo-Kamera-System und/oder eine RADAR-System, zur Erzeugung eines dreidimensionalen Bildes bezüglich des Umgebungsbereiches (5) ausbildet.

11. Landwirtschaftliche Arbeitsmaschine (1) nach Anspruch 4 und 10,
**dadurch gekennzeichnet,**
**dass** das Anonymisierungsmodul (6) zur Ermittlung des Nichtfeldbereiches (7) dazu vorgesehen und eingerichtet ist, wenigstens einen Teilbereich des zweidimensionalen Bildes der Kameravorrichtung mit dem zweidimensionalen Modell (11) und/oder dem dreidimensionalen Modell (12), insbesondere mittels einer Inverse-Perspective-Mapping-Methode, zu verknüpfen.

12. Landwirtschaftliche Arbeitsmaschine (1) nach einem der Ansprüche 1 bis 11,
**dadurch gekennzeichnet,**
**dass** das Anonymisierungsmodul (6) dazu vorgesehen und eingerichtet ist, bereits anonymisierte Abbildungsbereiche aufgrund einer ausreichenden Beabstandung (17) bezüglich der Sensorvorrichtung (3) zu ignorieren.

13. Landwirtschaftliche Arbeitsmaschine (1) nach einem der Ansprüche 1 bis 12,
**dadurch gekennzeichnet,**
**dass** die landwirtschaftliche Arbeitsmaschine (1) als autonome selbstfahrende landwirtschaftliche Arbeitsmaschine (1) ausgebildet ist.

14. Anonymisierungsmodul (6) zur Ermittlung und Anonymisierung eines Nichtfeldbereiches (7) in einer Abbildung (4) eines Umgebungsbereiches (5) einer landwirtschaftlichen Arbeitsmaschine (1) nach einem der Ansprüche 1 bis 13.

15. Verwendung des Anonymisierungsmoduls (6) gemäß dem Anspruch 14 in einer landwirtschaftlichen Arbeitsmaschine (1) nach einem der Ansprüche 1 bis 13, insbesondere innerhalb der landwirtschaftlichen Arbeitsmaschine (1) und/oder außerhalb der landwirtschaftlichen Arbeitsmaschine (1), während eines Einsatzes dieser landwirtschaftlichen Arbeitsmaschine (1) auf einem landwirtschaftlichen Feld (2), insbesondere zur Erzeugung von anonymisierten Daten, insbesondere anonymisierten Trainingsdaten und/oder anonymisierten Testdaten und/oder anonymisierten Validierungsdaten, für eine Einstellvorrichtung der landwirtschaftlichen Arbeitsmaschine (1) und/oder zum Trainieren eines neuronalen Netzwerks, welches in dieser landwirtschaftlichen Arbeitsmaschine (1) steuerungstechnisch eingesetzt wird.
